# EUROPÄISCHE PATENTSCHRIFT

(11) **EP 1 790 591 B1**
(45) Veröffentlichungstag und Bekanntmachung des Hinweises auf die Patenterteilung: **11.03.2009**
(21) Anmeldenummer: 06124895.1
(22) Anmeldetag: 28.11.2006
(51) Int. Cl.: B65G 1/137

(54) **Arbeitsplatz zum Komissionieren**
Commissioning area
Poste de préparation de commandes

(30) Priorität: 29.11.2005 DE 102005056938
(43) Veröffentlichungstag der Anmeldung: 30.05.2007
(73) Patentinhaber: Dematic GmbH, 63073 Offenbach am Main (DE)
(72) Erfinder: Stehr, Peter, 63179 Obertshausen (DE)
(74) Vertreter: Moser & Götze

(56) Entgegenhaltungen:
- WO-A-20/05066046
- DE-A1- 3 440 010
- DE-A1-8102004 014 37
- DE-U1- 29 806 960

## Beschreibung

Die Erfindung betrifft einen Arbeitsplatz zum Kommissionieren von Artikeln mit einem ersten Förderer, welcher Artikelbehälter zu dem Arbeitsplatz fördert und mit einem zweiten Förderer, welcher Auftragsbehälter von dem Arbeitsplatz abtransportiert, welche beiden Förderer in dem Umgebungsbereich einer Position eines Kommissionierers angeordnet sind.

Die entscheidende Größe zur Bemessung der Qualität eines Kommissionierarbeitsplatzes ist die Anzahl der abgewickelten Aufträge pro Zeiteinheit, welche auch Kommissionierleistung genannt wird. Eine hohe Kommissionierleistung ist nicht nur von der Person abhängig, welche die Kommissionierung durchführt, sondern auch im hohen Maße von den an dem Kommissionierarbeitsplatz vorzufindenden ergonomischen Bedingungen. Hierbei wirken sich geringe Wegzeitanteile, wenige Nebentätigkeiten, eine optimale Informationsbereitstellung und gute Verhältnisse beim Greifen und Ablegen des Kommissioniergutes im Sinne einer hohen Kommissionierleistung positiv aus.

Hinsichtlich der ergonomischen Optimierung von Kommissionierarbeitsplätzen gibt es bereits zahlreiche Vorschläge, bei denen regelmäßig der Artikelbehälter oder der Auftragsbehälter dynamisch an der Kommissionierstation bereitgestellt wird. Entsprechende Wegzeitanteile für die Wege zu diesen Behältern entfallen auf diese Weise vorteilhaft. In diesem Zusammenhang ist aus der deutschen Offenlegungsschrift DE 103 07 949 A1 bereits ein Kommissionierarbeitsplatz bekannt, bei dem Artikelbehälter seitlich eines Sitzplatzes für den Kommissionierer dynamisch bereitgestellt gestellt werden und der Kommissionierer stirnseitig einer Anförderung von Auftragsbehältern sitzt, wobei eine Anzeigeneinheit Kommissionieranweisungen darstellt.

Eine Kommissioniereinrichtung zur Bestückung von Versandbehälten ist auch aus der DE 298 06 960 U1 bekannt.

Insbesondere für einfachere Kommissionieraufgaben erscheint diese Lösung jedoch zu aufwendig, raumgreifend und zeitintensiv.

Die Erfindung hat es sich daher zur Aufgabe gemacht, einen Kommissionierarbeitplatz zu schaffen, welcher bei geringem konstruktiven Aufwand und Platz sparender Anordnung eine hohe Kommissionierleistung ermöglicht.

Zur Lösung der erfindungsgemäßen Aufgabe wird ein Arbeitsplatz nach Anspruch 1 vorgeschlagen. Die Unteransprüche beinhalten vorteilhafte Weiterbildungen der Erfindung. Die Erfindung erstreckt sich auch auf solche Ausführungen, die sich aus Kombinationen der Unteransprüche ergeben, auch wenn diese Kombinationen nicht durch explizite Rückbezüge unmittelbar vorgegeben sind.

Ein entscheidender Vorteil der Erfindung liegt darin, dass die Behälter, insbesondere bei einfachen Kommissionieraufträgen, fortgesetzt an dem Kommissionierarbeitsplatz vorbeigefördert werden können, während der Kommissionierer den Kommissionierauftrag ausführt. Ein anderer gewaltiger Vorteil liegt darin, dass für den Kommissionierarbeitsplatz lediglich zwei Förderer vorzusehen sind und nicht, wie im Stand der Technik häufig anzufinden, insgesamt vier Förderer, nämlich zwei für den die Anförderung von Auftragsbehälter bzw. Artikelbehälter und zwei für die Abförderung dieser Behälter.

Eine Möglichkeit für die Position des Kommissionierers besteht darin, diese zwischen den beiden Förderern anzuordnen, so dass der Kommissionierer die Behälter mit seinen Armen einfach erreichen kann. Eine einfache räumliche Anordnung wird erreicht, wenn die beiden Förderer in dem Umgebungsbereich der Position des Kommissionierers im Wesentlichen parallel angeordnet sind.

Das Zeitintervall zur Entnahme von Artikeln aus dem Artikelbehälter und Aufgabe von Artikeln in den Auftragsbehälter verlängert sich mit Vorteil, wenn die beiden Förderer in zueinander im Wesentlichen parallelen Richtungen fördern bzw. parallel zueinander angeordnet sind und in die gleiche Richtung fördern. Hierbei ist es außerdem insbesondere für einfache Kommissionieraufgaben zweckmäßig, wenn eine Steuerung derart ausgebildet ist, dass die beiden Förderer einen Artikelbehälter und einen Auftragsbehälter im Wesentlichen synchron in zueinander im Wesentlichen parallele Richtungen fördern. Der Auftragsbehälter kann auch entsprechend verzögert gefördert werden, insbesondere dann, wenn Artikel aus mehreren Artikelbehältern in den gleichen Auftragsbehälter eingelegt werden müssen und diese demnach den Auftragsbehälter gleichsam an dem Kommissionierarbeitsplatz überholen. Zweckmäßig ist auch eine Neigung mindestens eines Förderers, vorzugsweise des entfernter stehenden, in Richtung des Kommissionierers, so dass das Innere des Behälters für den Kommissionierer einfacher zu erreichen ist.

Damit der Kommissionierer die Behälter auf beiden Förderern stets gut erreichen kann auch, wenn einer entfernter angeordnet ist als der andere, ist es sinnvoll, wenn die Behälter auf den von dem Standort entfernter angeordneten Förderer in der von der Position des Kommissionierers am nächsten befindlichen Stellung auf dem Förderer von der Position weniger als ein Meter entfernt sind, so dass der Kommissionierer die Behälter mit seinem Arm erreichen kann. Hierbei ist es sinnvoll, wenn der erste Förderer, nämlich derjenige, der die Artikelbehälter fördert, näher an dem Standort des Kommissionierers angeordnet ist, als der zweite Förderer, der die Auftragsbehälter transportiert. Hierbei kann die Förderung der Auftragsbehälter auch mit derjenigen der Artikelbehälter getauscht werden.

Zweckmäßig kann eine Bedieneinheit an der Position des Kommissionierers zur Steuerung der Fördergeschwindigkeit an mindestens einem der beiden Förderer vorgesehen sein. Eine Steuerung kann außerdem derart ausgebildet sein, dass stets ein Auftragsbehälter und die Artikelbehälter, aus denen für den Auftrag Artikel zu entnehmen sind, derart an dem Arbeitsplatz vorbeigefördert werden, dass eine Entnahme aller Artikel und eine Aufgabe dieser in den Auftragsbehälter möglich ist und der Kommissionierer die Geschwindigkeit des Gesamtvorgangs mittels der Bedieneinheit steuern kann und dementsprechend vorzugsweise mittels einer Steueraktion die Geschwindigkeit beider Förderer zu beeinflussen vermag.

Eine vorteilhafte Weiterbildung der Erfindung sieht vor, dass die Bedieneinheit eine Sprachsteuerung aufweist, welche die Fördergeschwindigkeit mittels Sprachbefehlen beeinflussbar macht. Die Belastung des Kommissionierers wird zweckmäßig reduziert, wenn an der Position des Kommissionierers eine Sitzgelegenheit für den Kommissionierer vorgesehen ist.

Die Effizienz der Kommissionierung kann zusätzlich gesteigert werden, wenn eine Anzeigeeinheit vorgesehen ist, welche dem Kommissionierer die Kommissionieraufgabe anzeigt. Alternativ oder zusätzlich kann eine Sprachausgabe vorgesehen sein, mittels derer der Kommissionierer Anweisungen zum Kommissionieren erhält.

Im Folgenden ist die Erfindung anhand eines speziellen Ausführungsbeispiels unter Bezugnahme auf Zeichnungen zur Verdeutlichung ohne Einschränkung auf dieses Ausführungsbeispiel näher erläutert.

Es zeigen:

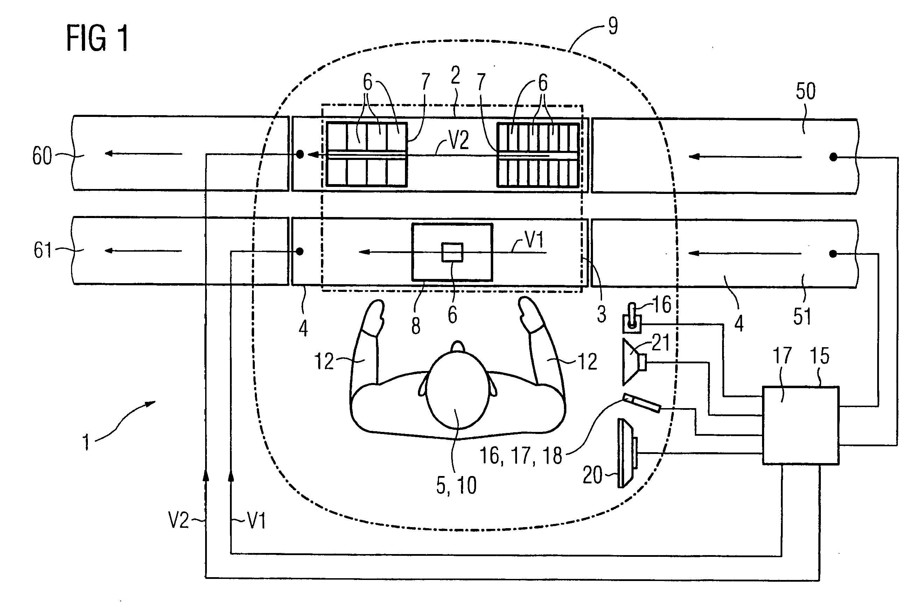

- Figur 1: einen erfindungsgemäßen Kommissionierarbeitsplatz in schematischer Darstellung und
- Figur 2: eine seitliche Ansicht des Kommissionierarbeitsplatzes aus Figur 1.

In den Figuren ist ein erfindungsgemäßer Arbeitsplatz mit dem Bezugszeichen 1 versehen, und besteht im Wesentlichen aus einem ersten Förderer 2, einem zweiten Förderer 4, einem Kommissionierfenster 3, in welchem ein Kommissionierer 5 Artikel 6 aus Artikelbehältern 7 entnimmt und in einen Auftragsbehälter 8 übergibt. Die Fördergeschwindigkeit des ersten 2 und des zweiten Förderers 4 ist variabel. Das Kommissionierfenster 3 befindet sich in einem Umgebungsbereich 9 der Position 10 des Kommissionierers 5, wobei das Kommissionierfenster 3 derart bemessen ist, dass der Kommissionierer 5 mit den Armen 12 die Artikelbehälter 7 und die Auftragsbehälter 8 erreichen kann und das Kommissionierfenster 3 mittels jeweils eines Seitschritts aus der zentralen Position in Richtung der Förderung oder in die entgegengesetzte Richtung in der Länge abschreiten kann. Auf diese Weise ergibt sich eine ideale Ausgewogenheit zwischen Ergonomie und Größe des Kommissionierfensters 3.

Der erste Förderer 2 ist entfernter von der Position des Kommissionierers angeordnet als der zweite Förderer 4, transportiert Artikelbehälter 7 und weist eine in Richtung des Kommissionierers 5 geneigte Schrägstellung auf. Auf diese Weise kann der Kommissionierer den Inhalt des Artikelbehälters 7 besser erreichen. Der zweite Förderer 4 transportiert die Auftragsbehälter 8.

An den ersten 2 und den zweiten Förderer 4 befinden sich jeweils stirnseitig angrenzend auffördernde 50, 51 und abfördernde 60, 61 Förderer, deren Fördergeschwindigkeit nicht gesondert von dem Kommissionierer gesteuert werden kann.

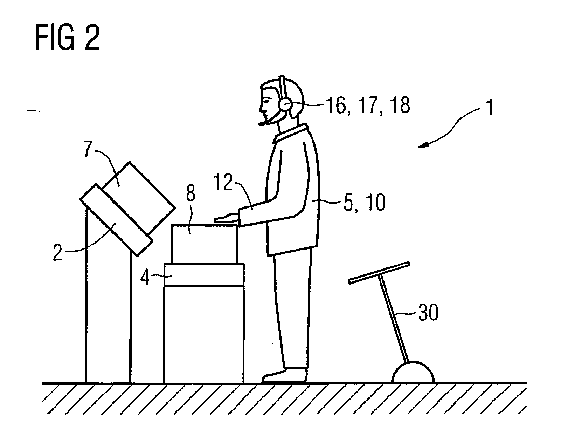

Mittels einer Steuerung 15 wird jeweils eine Fördergeschwindigkeit v1, v2 der beiden Förderer 2, 4 geregelt, wobei der Kommissionierer 5 mittels eines Bedienelements 16 die Fördergeschwindigkeit v1, v2 nach seinem Belieben regeln kann. Die Bedieneinheit 16 stellt dem Kommissionierer 5 außerdem eine Sprachsteuerung 17 zur Verfügung, die eine Steuerung der Fördergeschwindigkeit v1, v2 mittels Sprachbefehlen ermöglicht. In Figur 2 ist die Sprachsteuerung mittels eines am Kopf des Kommissionierers 5 angebrachten Mikrophons 18 vorgesehen. Daneben weist der Arbeitsplatz 1 eine Anzeigeeinheit 20 und eine Sprachausgabe 21 auf, die jeweils mit der Steuerung 15 in Verbindung stehen und dem Kommissionierer 5 Kommissionieranweisungen geben. Zur weiteren Steigerung der ergonomischen Qualität ist in Figur 2 eine Sitzgelegenheit 30 für den Kommissionierer 5 dargestellt, so dass die Tätigkeit auch Kraft sparend im Sitzen durchgeführt werden kann.

Die Steuerung 15 ist derart ausgebildet, dass bei Kommissionieraufträgen mit wenigen oder nur einer Kommissionierposition der Artikelbehälter 7 synchron mit dem Auftragsbehälter 8 durch das Kommissionierfenster 3 transportiert wird. Bei Kommissionieraufträgen mit mehreren Kommissionierpositionen kann der Auftragsbehälter 8 auf dem zweiten Förderer 4 anhalten und alle Artikelbehälter 7 für diesen Kommissionierauftrag können in Sequenz oder ohne Sequenz geschlossen durch das Kommissionierfenster 3 am Auftragsbehälter 8 vorbeifahren. Daneben ermöglicht die Steuerung 15 auch eine Arbeitsabfolge in der Weise, dass der Artikelbehälter 7 auf dem ersten Förderer 2 anhält und alle betreffenden Auftragsbehälter 8 von dem zweiten Förderer 4 an dem Artikelbehälter 7 vorbeitransportiert werden. Bei all diesen Vorgängen kann der Kommissionierer 5 die Fördergeschwindigkeiten v1, v2 entweder der beiden Förderer selektiv oder der beiden Förderer gemeinsam mittels der Bedieneinheit 16 steuern.

### Bezugszeichenliste

- v1: Fördergeschwindigkeit
- v2: Fördergeschwindigkeit
- 1: Arbeitsplatz
- 2: erster Förderer
- 3: Kommissionierfenster
- 4: zweiter Förderer
- 5: Kommissionierer
- 6: Artikel
- 7: Artikelbehälter
- 8: Auftragsbehälter
- 9: Umgebungsbereich
- 10: Position
- 12: Arm
- 15: Steuerung
- 16: Bedieneinheit
- 17: Sprachsteuerung
- 18: Mikrophon
- 20: Anzeigeeinheit
- 21: Sprachausgabe
- 30: Sitzgelegenheit
- 50: Förderer
- 51: Förderer
- 60: Förderer
- 61: Förderer

## Patentansprüche

1. Arbeitsplatz (1) zum Kommissionieren von Artikeln (1)
mit einem ersten Förderer (2), welcher Artikelbehälter (7) zu dem Arbeitsplatz (1) fördert und
mit einem zweiten Förderer (4), welcher Auftragsbehälter (8) von dem Arbeitplatz (1) abtransportiert, welche beiden Förderer (2) in dem
Umgebungsbereich (9) einer Position (10) eines Kommissionierers (5) angeordnet sind,
**dadurch gekennzeichnet,**
**dass** die beiden Förderer (2,4) in der Fördergeschwindigkeit (v1, v2) bedarfsgerecht variierbar ausgebildet sind, so dass der Kommissionierer (5) aus einem sich auf dem ersten Förderer (2) an der Position (10) vorbei sich bewegenden Artikelbehälter (7) Artikel (6) entnehmen und in einen Auftragsbehälter (8) einlegen kann, der sich zur selben Zeit auf dem zweiten Förderer (4) an der Position (10) vorbei bewegt.

2. Arbeitsplatz (1) nach Anspruch 1, **dadurch gekennzeichnet, dass** die Position (10) des Kommissionierers (5) zwischen dem ersten Förderer (2) und dem zweiten Förderer (4) angeordnet ist.

3. Arbeitsplatz (1) nach Anspruch 1 oder 2, **dadurch gekennzeichnet, dass** die beiden Förderer (2, 4) in dem Umgebungsbereich der Position (10) des Kommissionierers (5) im Wesentlichen parallel angeordnet sind.

4. Arbeitsplatz (1) nach Anspruch 1, 2 oder 3, **dadurch gekennzeichnet, dass** die beiden Förderer (2) in zueinander im Wesentlichen parallele Richtungen fördern.

5. Arbeitsplatz (1) nach einem der vorhergehenden Ansprüche, **dadurch gekennzeichnet, dass** eine Steuerung (15) derart ausgebildet ist, dass die beiden Förderer (2) einen Artikelbehälter (7) und einen Auftragsbehälter (8) im Wesentlichen synchron in zueinander im Wesentlichen parallele Richtungen fördern.

6. Arbeitsplatz (1) nach einem der vorhergehenden Ansprüche, **dadurch gekennzeichnet, dass** die Behälter auf dem von der Position (10) entfernter angeordneten Förderer (2) in der von der Position (10) des Kommissionierers (5) am nächsten befindlichen Stellung von der Position (10) weniger als einen Meter entfernt sind, so dass der Kommissionierer (5) die Behälter mit seinem Arm (12) erreichen kann.

7. Arbeitsplatz (1) nach einem der vorhergehenden Ansprüche, **dadurch gekennzeichnet, dass** der erste Förderer (2) näher an der Position (10) des Kommissionierers (5) angeordnet ist als der zweite Förderer (4).

8. Arbeitsplatz (1) nach einem der vorhergehenden Ansprüche, **dadurch gekennzeichnet, dass** eine Bedieneinheit (16) an der Position (10) des Kommissionierers (5) zur Steuerung der Fördergeschwindigkeit (v1, v2) mindestens einer der beiden Förderer (2) vorgesehen ist.

9. Arbeitsplatz (1) nach einem der vorhergehenden Ansprüche, **dadurch gekennzeichnet, dass** die Bedieneinheit (16) eine Sprachsteuerung (17) aufweist, mittels derer die Fördergeschwindigkeit (v1, v2) mindestens einer der beiden Förderer (2) mittels Sprachbefehlen steuerbar ist.

10. Arbeitsplatz (1) nach einem der vorhergehenden Ansprüche, **dadurch gekennzeichnet, dass** eine Sitzgelegenheit (30) für den Kommissionierer (5) an der Position (10) vorgesehen ist.

11. Arbeitsplatz (1) nach einem der vorhergehenden Ansprüche, **dadurch gekennzeichnet, dass** eine Anzeigeinheit (20) vorgesehen ist, welche dem Kommissionierer (5) die Kommissionieraufgabe anzeigt.

12. Arbeitsplatz (1) nach einem der vorhergehenden Ansprüche, **dadurch gekennzeichnet, dass** eine Sprachausgabe (21) vorgesehen ist, mittels derer der Kommissionierer (5) Anweisung empfängt.

## Claims

1. Working station (1) for the order picking of articles (1), having a first conveyor (2) which conveys article-holding containers (7) to the working station (1) and having a second conveyor (4) which transports order-holding containers (8) away from the working station (1), which two conveyors (2) are arranged in the area (9) surrounding a position (10) for an order picker (5), **characterised in that** the two conveyors (2, 4) are designed to be of a conveying speed (v1, v2) which can be varied to suit requirements, thus enabling the order picker (5) to take articles (6) from an article-holding container (7) which is moving past the position (10) on the first conveyor (2) and place them in an order-holding containing (8) which is moving past the position (10) at the same time on the second conveyor (4).

2. Working station (1) according to claim 1, **characterised in that** the position (10) for the order picker (5) is arranged between the first conveyor (2) and the second conveyor (4)

3. Working station (1) according to claim 1 or 2, **characterised in that** the two conveyors (2, 4) are arranged substantially in parallel in the area surrounding the position (10) for the order picker (5).

4. Working station (1) according to claim 1, 2 or 3, **characterised in that** the two conveyor (2) convey in directions which are substantially parallel to one another.

5. Working station (1) according to one of the foregoing claims, **characterised in that** a control system (15) is so designed that the two conveyors (2) feed an article-holding container (7) and an order-holding container (8) in directions which are substantially parallel to one another, substantially in synchronisation.

6. Working station (1) according to one of the foregoing claims, **characterised in that**, on the conveyor (2) which is arranged farther away from the position (10), the containers are, at the point where they are situated closest to the position (10) for the order picker (5), less than a metre away from the position (10), thus enabling the order-picker (5) to reach the containers with his arm (12).

7. Working station (1) according to one of the foregoing claims, **characterised in that** the first conveyor (2) is arranged nearer to the position (10) for the order picker (5) than the second conveyor (4).

8. Working station (1) according to one of the foregoing claims, **characterised in that** a control unit (16) is provided at the position (10) for the order picker (5) to allow the speed of conveying (v1, v2) of at least one of the two conveyors (2) to be controlled.

9. Working station (1) according to one of the foregoing claims, **characterised in that** the control unit (16) has a speech-operated control system (17) by means of which the speed of conveying (v1, v2) of at least one of the two conveyors (2) can be controlled by means of spoken commands.

10. Working station (1) according to one of the foregoing claims, **characterised in that** seating facilities (30) for the order picker (5) are provided at the position (10).

11. Working station (1) according to one of the foregoing claims, **characterised in that** a display unit (20) is provided which displays the order-picking job to the order picker (5).

12. Working station (1) according to one of the foregoing claims, **characterised in that** a speech output means (21) is provided by means of which the order picker (5) receives instructions.

## Revendications

1. Poste de travail (1) pour la préparation de commandes d'articles (1), ledit poste de travail comprenant
- un premier transporteur (2) qui transporte des récipients d'articles (7) vers le poste de travail (1) et
- un deuxième transporteur (4) qui emporte des récipients de commande (8) du poste de travail (1), les deux transporteurs (2) étant disposés dans la région (9) au voisinage d'une position (10) d'un préparateur de commandes (5),
**caractérisé en ce que**
les deux transporteurs (2, 4) sont conformés de façon à ce que l'on puisse faire varier la vitesse de transport (v1, v2) selon le besoin de sorte que le préparateur de commandes (5) puisse retirer des articles (6) d'un récipient d'articles (7) se déplaçant devant la position (10) sur le premier transporteur (2) et introduire lesdits articles dans un récipient de commande (8) qui se déplace au même moment devant la position (10) sur le deuxième transporteur (4).

2. Poste de travail (1) selon la revendication 1, **caractérisé en ce que** la position (10) du préparateur de commandes (5) est disposée entre le premier transporteur (2) et le deuxième transporteur (4).

3. Poste de travail (1) selon la revendication 1 ou 2, **caractérisé en ce que** les deux transporteurs (2, 4) sont disposés sensiblement parallèlement dans la région au voisinage de la position (10) du préparateur de commandes (5).

4. Poste de travail (1) selon la revendication 1, 2 ou 3, **caractérisé en ce que** les deux transporteurs (2) se déplacent dans des directions sensiblement parallèles l'une à l'autre.

5. Poste de travail (1) selon l'une des revendications précédentes, **caractérisé en ce qu'**une commande (15) est conformée de telle sorte que les deux transporteurs (2) transportent un récipient d'articles (7) et un récipient de commande (8) de façon sensiblement synchrone et dans des directions sensiblement parallèles l'une à l'autre.

6. Poste de travail (1) selon l'une des revendications précédentes, **caractérisé en ce que** les récipients, qui se trouvent dans la position la plus proche de la position (10) du préparateur de commandes (5) sur le transporteur (2) placé à distance de la position (10), sont éloignés de moins d'un mètre de la position (10) de sorte que le préparateur de commandes (5) peut atteindre les récipients avec son bras (12).

7. Poste de travail (1) selon l'une des revendications précédentes, **caractérisé en ce que** le premier transporteur (2) est disposé plus près de la position (10) du préparateur de commandes (5) que le deuxième transporteur (4).

8. Poste de travail (1) selon l'une des revendications précédentes, **caractérisé en ce qu'**une unité de commande (16) est prévue à la position (10) du préparateur de commandes (5) afin de commander la vitesse de transport (v1, v2) de l'un au moins des deux transporteurs (2).

9. Poste de travail (1) selon l'une des revendications précédentes, **caractérisé en ce que** l'unité de commande (16) possède une commande vocale (17) qui permet de commander la vitesse de transport (v1, v2) de l'un au moins des deux transporteurs (2) à l'aide d'ordres vocaux.

10. Poste de travail (1) selon l'une des revendications précédentes, **caractérisé en ce qu'**un siège (30) est prévu pour le préparateur de commandes (5) à la position (10).

11. Poste de travail (1) selon l'une des revendications précédentes, **caractérisé en ce qu'**il est prévu une unité de présentation (20) qui présente la tâche de préparation de commandes au préparateur de commandes (5).

12. Poste de travail (1) selon l'une des revendications précédentes, **caractérisé en ce qu'**il est prévu un dispositif de reproduction vocale (21) qui permet de délivrer une instruction au préparateur de commandes (5).
